# EUROPÄISCHE PATENTSCHRIFT

(11) **EP 0 793 063 B1**
(45) Veröffentlichungstag und Bekanntmachung des Hinweises auf die Patenterteilung: **31.05.2000**
(21) Anmeldenummer: 97810081.6
(22) Anmeldetag: 19.02.1997
(51) Int. Cl.: F24H 8/00

(54) **Heizanlage mit Wärmetauscher**
Heating installation with heat exchanger
Installation de chauffage avec échangeur de chaleur

(30) Priorität: 01.03.1996 CH 53196
(43) Veröffentlichungstag der Anmeldung: 03.09.1997
(73) Patentinhaber: Ris, Werner, 4133 Pratteln (CH)
(72) Erfinder: Ris, Werner, 4133 Pratteln (CH)
(74) Vertreter: Melzer, Wolfgang, Dipl.-Ing.

(56) Entgegenhaltungen:
- EP-A- 0 106 344
- EP-A- 0 699 878
- FR-A- 2 616 215
- GB-A- 2 043 850
- US-A- 4 541 410
- US-A- 4 677 939

## Beschreibung

Die Erfindung betrifft eine Heizanlage mit dem Merkmalen des Oberbegriffs des Anspruches 1.

Eine solche Heizanlage ist aus der EP-A-0106 344 bekannt. Die von der Brennkammer vertikal nach unten führenden das Brenngas einer Kondensatkammer zuführenden Leitungen sind von Hüllrohren umgeben, die in ein Wasserbad tauchen. Die Hüllrohre werden zur Kühlung der Brenngase im Zwischenraum zwischen Hüllrohr und Brenngasrohr von Wasser aus dem Wasserbad von unten nach oben durchströmt. Das Wasserbad kann von einem Luftführungsmantel umgeben sein, wobei die Luft durch das Wasserbad erwärmt werden kann. Ein Teil oder die gesamte Luft kann dem Brenner zugeführt werden.

Gemäß der US 45 41 410 kann die Brenngas führende Rohrleitung in dem Wasserbad nach Art einer Rohrschlange ausgebildet sein.

Zweck einer solchen Heizanlage ist es, sowohl die in einen Kamin austretenden Abgase durch Kondensation von einem großen Teil ihrer Schadstoffe wie Brandasche, Ruß oder dergleichen zu reinigen als auch Wärmeverluste zu reduzieren. Hierdurch kann die zuzuführende Wärmemenge verringert werden. Durch die Kondensierung der Abgase (Brenngase) im Wärmetauscher werden die Schadstoffe im Kondensat in den Brenngasrohren fortschreitend gesammelt und schließlich wie üblich einem Abscheider zugeführt.

Es ist Aufgabe der vorliegenden Erfindung, eine Heizanlage der bekannten Art dahingehend zu optimieren.

Die Aufgabe wird durch die Merkmale des Anspruches 1 gelöst.

Die Erfindung wird durch die Merkmale der Unteransprüche weitergebildet.

In Folge der Ausbildung der Rohrschlange ohne scharfe Umlenkungen mit stetigem Gefälle ist zum einen der kontinuierliche Abfluß des schadstoffführenden Kondensats gewährleistet. Ferner wird dadurch daß mittels des Gebläses die Brenngase in den Wärmetauscher zwangsweise gefördert und andererseits die erwärmte Frischluft aus dem Wärmetauscher heraus und zum Brenner geführt wird, eine optimale Erwärmung der die Rohrschlange im Querstrom umspülende Frischluft erreicht, die noch durch Turbulenzbildung in der Rohrschlange erhöht wird. Der Wärmeübergang zwischen Abgasen (Brenngas) und Frischluft wird dadurch optimal. Zudem verhindert der durch das Gebläse erzeugte Unterdruck im Brennraum ein Erlöschen der Flamme und hält diese vielmehr sogar stabil. Durch eine zusätzliche Leitung zur Rückführung eines Teils der gekühlten Brenngase zum Brenner kann überdies die Flamme zusätzlich gekühlt werden, was zur weiteren Verbesserung der Abgaswerte führt.

Die Erfindung wird anhand der in der Zeichnung dargestellten Ausführungsbeispielen näher erläutert.
Fig. 1 der Zeichnung zeigt ein Ausführungsbeispiel einer erfindungsgemäßen Heizanlage im Schnitt,
Fig. 2 zeigt eine beispielsweise alternative Anordnung der Bauelemente der Anlage.

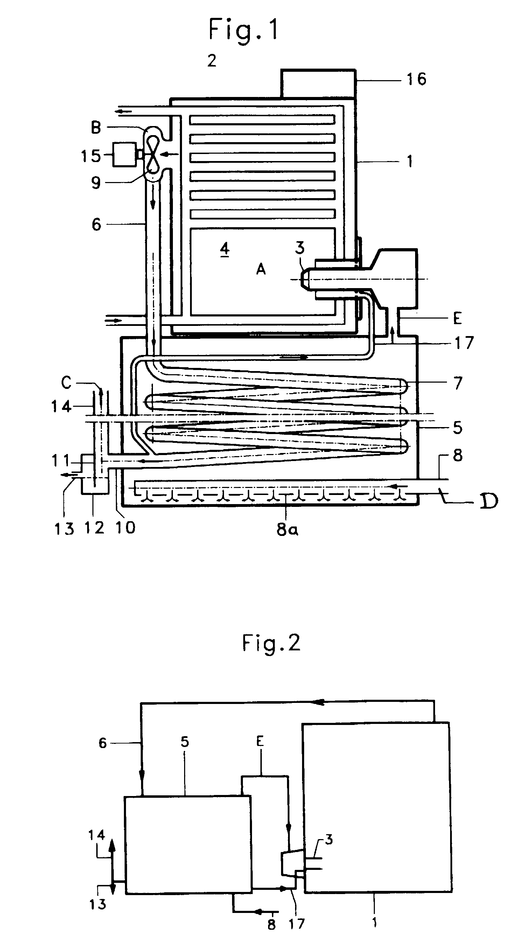

Mit 1 ist in Fig. 1 der Kessel mit der Heizschlange 2, dem Brenner 3 und dem Brennraum 4 bezeichnet. dem Kessel ist ein Wärmetauscher 5 nachgeschaltet. Durch die Abgasleitung 6 werden die Brenngase in die Rohrschlange 7 im Tauscher 5 geführt, die von oben nach unten ohne Umlenkungen kontinuierlich gebogen ist. Von unten wird Frischluft durch Leitung 8 in das Tauschergehäuse eingeführt. Die Frischluft tritt durch eine Vielzahl von Öffnungen 8a aus dem Rohr nach unten aus, sodass eine gute Verteilung im Tauscherraum gewährleistet ist.
Zwischen Brennraum 4 und Abgasleitung 6 ist ein Gebläse 9 angeordnet, das die Brenngase aktiv in die Rohrschlange 7 fördert. Dadurch wird im Brennraum 4 ein Unterdruck und in der Rohrschlange 7 ein Überdruck erzeugt. Durch den Unterdruck wird die zugeführte Frischluft bei D angesaugt und dem Brenner E zugeführt, nachdem sie die Rohrschlange 7 von unten nach oben im Querstrom umspült und dabei erwärmt wird. Gleichzeitig werden die Brenngase auf etwa 30 - 40° C abgekühlt. Dabei kondensieren sie fortschreitend, wobei die Schadstoffe im Kondensat gebunden werden und zusammen mit den gekühlten Brenngasen bei 10 austreten.
In einem Abscheider 11 wird das kontinuierlich abfliessende Kondensat ausgeschieden und fliesst in einen Sammler 12, wo es in an sich bekannter Weise durch chemische Reaktion soweit neutralisiert wird, dass es pH-neutral in die Kanalisation 13 abgeführt werden kann. Die Abgase gelangen bei 14 gereinigt in den Kamin.
Die Leistung des Gebläsemotors 15 wird durch eine elektronische Steuerung 16 geregelt, die mit einer Drucksonde im Brennerraum 4 verbunden ist. Sie wird so geregelt, dass eine stabile Flamme bei konstanten Verbrennungsbedingungen gewährleistet wird. Dadurch ensteht kein Startruss und es wird eine grosse Brenner-Zuverlässigkeit erreicht. Durch den Förderdruck entsteht Turbulenz in der Rohrschlange 7. Diese bewirkt einen noch höheren Wärmeübergang und einen noch besseren Abfluss des Kondensates mit den Schadstoffen. Auch die entstehende Kondensationswärme wird an die Frischluft abgegeben.

Es können auch mehrere parallel geführte Rohrschlangen 7 vorgesehen sein.

Bei einer besonders vorteilhaften Ausführung wird eine Teilmenge des gekühlten Abgases durch eine Leitung 17 zur Brenner-Flamme zurückgeführt, um diese zu kühlen. Dadurch kann die Temperatur derselben unter 1000° C gehalten werden, wodurch die Bildung von NOx reduziert wird.
Die Rohrschlange weist keine toten Zonen auf, in denen sich das Kondensat festsetzen könnte. Sie ist demzufolge selbstreinigend. Wegen der tiefen Abgas-Temperaturen kann sie aus Kunststoff bestehen, wodurch Korrosion vermieden wird. Bei einer erfindungsgemäss ausgeführten Anlage wurden z.B. an den Stellen A - E die folgenden Betriebs-Temperaturen gemessen:

| | | | |
|---|---|---|---|
| A: | < 1000°C | B: | 81°C |
| C: | 40°C | D: | -9°C |
| E: | 48°C | | |

Die Wärme-Rückgewinnung beträgt bei Oel- bzw. Gasbrennern ca. 20 %

Die besondere Konstruktion verhindert in den Brennpausen das Entweichen von Wärme durch den Kamin. Das System wird deshalb nicht durch Zugluft ausgekühlt. Messungen ergaben Abgas-Wärmeverluste von unter 1%. Die Abgaswerte (CO, CO2, NOx) blieben weit unter der gesetzlich (LRV 1992) vorgeschriebenen Grenze. Das System arbeitet ganzjährig im Brennwertbereich.

Der Wärmetauscher muss nicht zwingend unter dem Kessel angeordnet werden. Bei der beispielsweisen Anordnung der Komponenten gemäss Fig. 2 befindet sich der Wärmetauscher auf gleicher Höhe mit dem Kessel. Andere Anordnungen sind möglich je nach der baulichen Situation.

## Patentansprüche

1. Heizanlage,
mit einem durch einen Brenner (3) beheizten Kessel (1) und einem nachgeordneten Wärmetauscher zur Kühlung der Brenngase und Abscheidung von Kondensat aus diesen,
wobei im Wärmetauscher die zu kühlenden Brenngase nach unten und das dabei erwärmte Medium nach oben geführt sind,
wobei ferner Luft erwärmbar und dem Brenner (3) zuführbar ist,
**dadurch gekennzeichnet**,
daß die zu kühlenden Brenngase eine von oben nach unten kontinuierlich gebogene Rohrschlange (7) ohne Umlenkungen durchströmen,
daß das Medium durch Frischluft gebildet ist, die in den Wärmetauscher (5) unten (8, 8a) einströmt, die dort die Rohrschlange (7) im Querstrom umspült und die oben aus dem Wärmetauscher (5) austretend vorgewärmt dem Brenner (3) zugeführt ist, und
daß ein Gebläse (9) so vorgesehen ist, daß es bezüglich der Brenngase im Brennraum (4) des Brenners (3) Unterdruck und in der Rohrschlange (7) Überdruck erzeugt.

2. Heizanlage nach Anspruch 1, dadurch gekennzeichnet, dass das Gebläse (9) zwischen Kessel (1) und Wärmetauscher (5) angeordnet ist, derart, dass es die Brenngase zwangsweise durch die Rohrschlange fördert und die vorgewärmte Frischluft zum Brenner zieht.

3. Heizanlage nach Anspruch 2, dadurch gekennzeichnet, dass das Gebläse mit einer Leistungssteuerung (16) versehen ist, die zwecks Aufrechterhaltung eines einstellbaren stabilen Unterdrucks im Brennraum mit einer Drucksonde im Brennraum verbunden ist.

4. Heizanlage nach Anspruch 1, gekenzeichnet durch eine Leitung ( 17) zur Rückführung eines Teils der gekühlten Brenngase zum Brenner.

5. Heizanlage nach Anspruch 1, gekennzeichnet durch einen Kondensat-Abscheider (11) am Ende der Rohrschlange (7) zur Abführung der Rauchgase in den Kamin, welcher Abscheider ein Sammler (12) zum Sammeln des Kondensates nachgeschaltet ist.

6. Heizanlage nach Anspruch 5, dadurch gekenzeichnet, dass der Sammler Mittel zur chemischen Neutralisierung des Kondensates enthält.

## Claims

1. Heating apparatus,
having a boiler (1) heated by means of a burner (3), and a following heat exchanger for cooling the combustion gases and separating condensates from these gases,
whereby in the heat exchanger the combustion gases to be cooled are guided downwardly and the medium heated thereby is guided upwardly,
whereby, further, air can be heated and supplied to the burner (3),
characterised in that,
the combustion gases to be cooled flow through a coiled pipe which is continuously curved from above downwardly, without deflections,
in that the medium is provided by fresh air which flows into the heat exchanger (5) below (8, 8a), which there flows around the coiled pipe (7) in counter-flow and which, emerging upwardly out of the heat exchanger, (5) is delivered pre-heated to the burner (3), and
in that a fan (9) is so provided that it generates, relative to the combustion gases, under-pressure in the combustion chamber (4) of the burner (3) and overpressure in the coiled pipe (7).

2. Heating apparatus according to claim 1,
characterised in that,
the fan (9) is arranged between the boiler (1) and the heat exchanger (5) such that it forces the combustion gases through the coiled pipe and draws the pre-heated fresh air to the burner.

3. Heating apparatus according to claim 2,
characterised in that,
the fan is provided with a power controller (16) which, for the purpose of maintaining a selectable stable under-pressure in the combustion chamber, is connected with a pressure sensor in the combustion chamber.

4. Heating apparatus according to claim 1,
characterised by
a line (17) for returning a part of the cooled combustion gases to the burner.

5. Heating apparatus according to claim 1,
characterised by
a condensate separator (11) at the end of the coiled pipe (7) for discharge of the flue gases into the chimney, a collector (12) for the collection of the condensate being arranged after the separator.

6. Heating apparatus according to claim 5,
characterised in that,
the collector contains a medium for the chemical neutralisation of the condensate.

## Revendications

1. Installation de chauffage comportant une chaudière (1) chauffée au moyen d'un brûleur (3) ainsi qu'un échangeur de chaleur monté derrière pour le refroidissement des gaz de combustion et la séparation du condensat et des gaz,
dans l'échangeur de chaleur les gaz de combustion à refroidir étant guidés vers le bas et le fluide ainsi chauffé étant guidé vers le haut,
de l'air pouvant en outre être chauffé et alimenté au brûleur (3),
caractérisée
en ce que les gaz de combustion à refroidir traversent un serpentin (7) courbé en arc en continu, du haut vers le bas, sans changement de direction, en ce que le fluide est constitué par de l'air frais qui pénètre à la partie inférieure (8, 8a) dans l'échangeur de chaleur (5), qui y circule dans un courant transversal autour du serpentin (7) et qui, sortant à la partie supérieure de l'échangeur de chaleur (5), est acheminé préchauffé, vers le brûleur (3) et
en ce qu'il est prévu une soufflante (9) de manière qu'en ce qui concerne les gaz de combustion il soit produit une dépression dans la chambre de combustion (4) du brûleur (3) et une surpression dans le serpentin (7).

2. Installation de chauffage selon la revendication 1, caractérisée en ce que la soufflante (9) est disposée entre la chaudière (1) et l'échangeur de chaleur (5) de manière à faire circuler forcément les gaz de combustion à travers le serpentin et à tirer l'air frais préchauffé vers le brûleur.

3. Installation de chauffage selon la revendication 2, caractérisée en ce que la soufflante est pourvue d'une commande de puissance (16) qui est reliée à une sonde de pression dans la chambre de combustion afin de maintenir une dépression stable et réglable dans la chambre de combustion.

4. Installation de chauffage selon la revendication 1, caractérisée par une conduite (17) pour le retour d'une partie des gaz de combustion refroidis vers le brûleur.

5. Installation de chauffage selon la revendication 1, caractérisée par un séparateur de condensat (11) à l'extrémité du serpentin (7) pour évacuer les gaz de fumée dans la cheminée, un collecteur (12) destiné à collecter le condensat étant monté derrière le séparateur.

6. Installation de chauffage selon la revendication 5, caractérisée en ce que le collecteur contient des moyens pour la neutralisation chimique du condensat.
